# EUROPEAN PATENT SPECIFICATION

(11) **EP 3 184 980 B1**
(45) Date of publication and mention of the grant of the patent: **03.04.2019**
(21) Application number: 15201665.5
(22) Date of filing: 21.12.2015
(51) Int. Cl.: G01K 1/08, G01K 13/02

(54) **TEMPERATURE SENSOR FOR MEASURING THE TEMPERATURE OF A MEDIUM IN A VESSEL OR A PIPE**
TEMPERATURSENSOR ZUR MESSUNG DER TEMPERATUR EINES MEDIUMS IN EINEM BEHÄLTER ODER ROHR
CAPTEUR DE TEMPÉRATURE POUR MESURER LA TEMPÉRATURE D'UN MILIEU DANS UN RÉCIPIENT OU UN TUYAU

(43) Date of publication of application: 28.06.2017
(73) Proprietor: ENDRESS + HAUSER WETZER GmbH + Co. KG, 87484 Nesselwang (DE)
(72) Inventor: Del Bianco, Massimo, 20900 Monza (MB) (IT); Casirati, Paolo, 24047 Treviglio (IT)
(74) Representative: Andres, Angelika Maria

(56) References cited:
- WO-A1-2005/045382
- US-A1- 2013 142 216

## Description

The invention refers to a temperature sensor for measuring the temperature of a medium in a vessel or a pipe.

Temperature sensors are frequently used in the field of automation engineering, for example to measure the temperature of a medium in a pipe and/or in a vessel, or in field devices, such as thermal flowmeters for measuring the flow velocity and/or the density of a medium in a pipe. Such temperature sensors and field devices are produced and sold by the patent applicant. The underlying measuring principles for temperature sensors and field devices are known from a wide range of publications.

Temperature sensors comprise a temperature-sensitive component, which is often arranged inside a thermowell. The thermowell performs the function of a housing, which protects the temperature-sensitive component against aggressive media and/or forces, for example, which are caused by the flow of the medium. Another advantage of a thermowell is that it is possible to hot-swap the temperature-sensitive component during operation.

To ensure the functionality of the temperature sensor, there must be as good a thermal contact as possible between the temperature-sensitive component and the thermowell.

If temperature sensors are used in pipes, they come into contact with the flowing medium, which causes them to be exposed to different mechanical forces. For one, these are shear forces which result from the contact of the flowing medium with the temperature sensor, which is often installed in the pipe orthogonally to the flow direction, and act on the temperature sensor. Secondly, oscillating forces induced by vortex shedding act on the temperature sensor, resulting in vibrational movements of the body.

In fluid dynamics, vortex shedding, also known as the "Kármán vortex street", is a repeating pattern of swirling vortices in alternating directions caused by the unsteady separation of flow of a medium around a body, causing said body to vibrate. The closer the frequency of the vibrations is to the natural frequency of the body around which the medium flows, the more the body vibrates. The frequency of the vibrations is determined by process parameters, such as the physical properties of the medium, the flow velocity and the shape of the temperature sensor, in particular. With a temperature sensor as the body around which medium flows, this can result in damage to and even the collapse of the temperature sensor, or - to speak in more general terms - to a reduction in the service and operating life of the temperature sensor.

This phenomenon must be duly considered in the development of a temperature sensor and be taken into account in the sensor design. Today there are standard methods, such as ASME PTC 19.3 TW-2000, which define design rules and with the help of said rules a temperature sensor design can be checked mathematically with regard to vortex shedding. These methods only apply, however, to certain types of temperature sensor and under certain process conditions. The basic principle of the design rules is to increase the natural frequency of the temperature sensor to ward off it from the vortex shedding frequency to eliminate the dangerous effects of a resonance condition. This goal is often reached by changing the geometry of the temperature sensor, for example by reducing its length and/or by increasing its diameter.

Alternatively, when functional constraints don t allow a change in the geometry, mechanical supports or absorbers are used which are fitted between the opening of the vessel and the outside of the temperature sensor. These supports also increase the natural frequency of the temperature sensor by reducing the free length of the temperature sensor. However it proves difficult to fit the supports in such a way that a high level of coupling and therefore the desired effect can be achieved.

Structural elements are known from the prior art, particularly from the offshore sector, whose purpose is to prevent vortex shedding entirely or to at least weaken vortex shedding to a large extent.

US 2004/0051004 A1 presents a structure wherein smoothly curved protuberances are added to an elongate body to reduce vortex shedding. These elongate bodies can be adapted for example for use as chimneys of a factory, towers of a wind turbine, a support member of an offshore platform or an underwater cable.

US 8,500,367 B2 describes a way to protect a marine riser against vibrations caused by vortex shedding. The riser is routed through discoidal elements at regular intervals which have U-shaped indentations along their circumference.

US 6,401,646 B1 describes a shell that can be secured to an underwater cable, for example. Said shell has fins at opposite locations to reduce vortex shedding.

All of the publications cited, however, do not deal with temperature sensors, or present designs which are difficult to implement due to the complexity of manufacturing a temperature sensor.

US 2013/0142216 A1 discloses a sensor tube for protecting a sensor inserted into a moving process fluid. The sensor tube includes a process interface section for mounting to a process vessel and an extended section extending from the process interface section to a sealed end. The extended section includes a twisted section having a longitudinal axis. The process interface section and the extended section define a sensor bore configured to receive a sensor therein. The twisted section has a cross section that includes at least three equally sized walls and wherein the walls form helixes along the longitudinal axis of the twisted section.

WO 2005/045382 A1 discloses a temperature sensor arrangement including a sensor cavity and a cylindrical outer casing surrounding the sensor cavity. In one embodiment, the outer casing includes a pattern of flow passages for allowing air flow to the temperature sensing element in the sensor cavity, the flow passages being angled such that there is no direct line of air flow from an exterior of the outer casing to the sensing element.

The problem addressed by the invention is therefore to present a temperature sensor which can be used for as long as possible without any defects.

The problem is solved by a temperature sensor for measuring the temperature of a medium in a vessel or a pipe according to claim 1.

The advantage of the temperature sensor according to the invention is that the vortex shedding is attenuated to a large extent, as a result of which the forces induced by the vortex shedding and acting on the temperature sensor are also greatly reduced. This increases the service life and operating life of the temperature sensor.

According to the invention, the sheath is perforated in such a way that provides a porosity in the range of 28% to 64%, wherein the porosity is a ratio of the total area of the holes to the total area of the sheath. Combined with the optimum range of the ratio between the diameter of the sheath and the outer diameter of the tip of the thermowell, a reduction in vortex shedding of up to 96% can be achieved.

Another advantage is that the temperature sensor can be manufactured in a simple manner. Apart from the standard components of the temperature sensor - such as the temperature-sensitive component and the thermowell - only a perforated sheath is required. This can be made, for example, from a perforated metal which is bent into a pipe and then welded.

The temperature sensor according to the invention can be used in a wide range of applications. For example, the temperature sensor is used in a thermal flowmeter or in another application mentioned in the introduction to the description.

The temperature sensor according to the invention does not necessarily need to have a thermowell. It is also possible that a temperature-sensitive component, which has a rod-like design, is covered by the sheath and thereby receives protection against vibrations which are induced through vortex shedding.

In one embodiment of the temperature sensor according to the invention, the sheath projects over the tip of the thermowell in an axial direction.

In a preferred further development of the temperature sensor according to the invention, the sheath has an end edge featuring a perforation with semi-circular holes. The end edge can then be manufactured in such a way that the material is cut via a series of perforated holes. Apart from the perforation of the sheath, the structure of the end edge is a determining factor for the effect of vortex attenuation.

In a particularly preferred embodiment of the temperature sensor according to the invention, the ratio of the diameter of the sheath to the outer diameter of the tip of the thermowell is in the range from 1.1 to 1.5. This range is adapted for Reynolds numbers between 2x10⁴ and 2x10⁵ and ensures optimum reduction of vortex shedding.

In an advantageous further development of the temperature sensor according to the invention, the first end section of the thermowell has an outer diameter, wherein the outer diameter of the second end section is equal to the outer diameter of the first end section of the thermowell or is smaller than the outer diameter of the first end section of the thermowell. If the sheath has the same outer diameter as the first end section of the thermowell, an edge-free transition can be achieved between the first end section of the thermowell and the sheath.

In one version of the temperature sensor according to the invention, the second end section of the thermowell is cylindrical in shape.

In another version of the temperature sensor according to the invention, the second end section of the thermowell tapers conically. Due to the fact that the sheath covers the entire second end section of the thermowell, the second end section can have any shape. In this way, it is possible to use a rod-shaped thermowell with a square cross-section or a cross-section of another shape.

In a further development of the temperature sensor according to the invention, the sheath is made from a metallic material, particularly stainless steel or a metal alloy, a ceramic material or a composite material. This ensures protection against aggressive media.

In an embodiment of the temperature sensor according to the invention, the thermowell is made from a metallic material, particularly stainless steel or a metal alloy, a ceramic material or a composite material. This ensures good thermal conduction from the process medium to the temperature-sensitive component on the one hand, and the thermowell is resistant to aggressive media on the other.

In one version of the temperature sensor according to the invention, the sheath is fitted on the thermowell via a welding process, an adhesive process or mechanically. These standard procedures reduce the production complexity and effort such that the temperature sensor can be produced in a time-effective and cost-saving manner.

In one version of the temperature sensor according to the invention, the sheath is fitted on the thermowell in more than one point over the whole length. This solution is useful to guarantee the robustness of the assembly especially in case of high length.

In one embodiment of the temperature sensor according to the invention, the sheath is additionally fitted on the thermowell using fastening elements, enabling greater stability.

In a further development of the temperature sensor according to the invention, the sheath is not permanently secured to the thermowell, but instead is mounted on the thermowell as a mobile or pivoted part. At a high flow rate, therefore, the position can change depending on the flow which prevents damage to the sheath on account of a high application of force from the flow.

In an embodiment of the temperature sensor according to the invention, the fastening unit is a screwed plug, a weld-in piece or a flange. However, any other common means of fastening can also be used.

In a preferred embodiment of the temperature sensor according to the invention, the thermowell has an annular element in addition to the fastening unit via said element the first end section of the thermowell is in permanent contact with an inlet of the vessel. In this way, the remaining vibrations can be additionally attenuated.

The invention is explained in more detail on the basis of the following Figures 1 to 3.
Fig. 1 shows a schematic illustration of the origination of vortex shedding at a temperature sensor;
Fig. 2 shows an embodiment of the temperature sensor according to the invention; and
Fig. 3 shows a further development of the temperature sensor according to the invention.

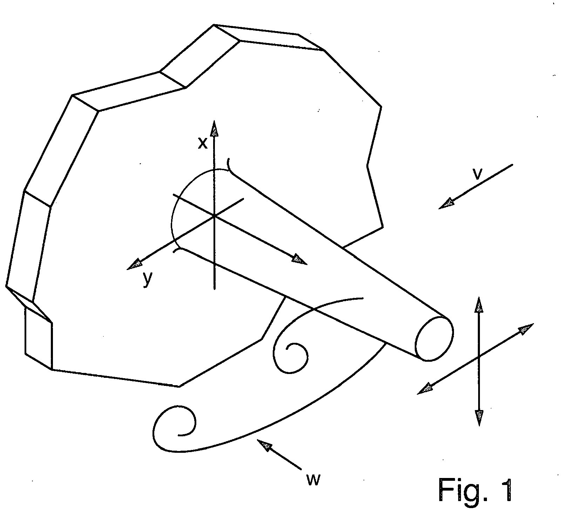

Fig. 1 shows a schematic illustration of the origination of vortex shedding w at a temperature sensor 1. If a flowing medium encounters a structure, in this case a cylindrical, conically tapered temperature sensor 1, a ridge-like pattern develops downstream of the structure in the flow direction v. Depending on the flow velocity, vortex shedding w of this ridge develops in the flow direction. On account of the vortex shedding, vibrations now act on the temperature sensor 1 in the form of two forces, a shear force in the in y direction and a lifting force in the x direction. The shear force in the y direction oscillates at a frequency fₛ, the lifting force in the x direction oscillates at twice the frequency 2fₛ.

The frequency fₛ depends on the flow velocity of the medium, medium properties such as the viscosity and density, and on the dimensions of the temperature sensor 1, such as the sensor diameter and length.

The closer the frequency fₛ is to the natural frequency of the temperature sensor and the higher the flow velocity, the greater the resulting oscillating forces. As a result of these forces, the temperature sensor 1 can be damaged or break down completely. This is known as resonance condition.

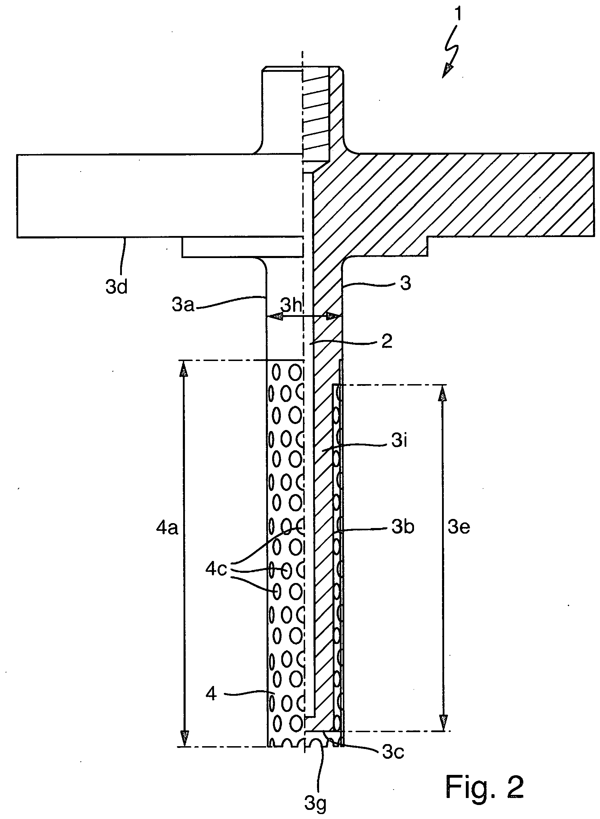

Fig. 2 shows an embodiment of the temperature sensor 1 according to the invention that solves the problems cited. The temperature sensor according to the invention comprises a thermowell 3, which has a first end section 3a, a second end section 3b with a sealed end 3c and an interior area 3j.

A fastening unit 3d is located on the first end section 3a, said fastening unit securing the thermowell 3 on a vessel. For this, the thermowell 3 is guided through an inlet of the vessel and fixed on the vessel via a fastening unit 3d. The fastening unit 3d can, for example, be a screwed plug, a weld-in piece or a flange. However, any other common means of fastening can also be used. The thermowell 3 is made from a metallic material, particularly stainless steel or a metal alloy, a ceramic material or a composite material. This ensures good thermal conduction from the process medium to the temperature-sensitive component on the one hand, and the thermowell is resistant to aggressive media on the other.

A temperature-sensitive component 2 is then guided into the thermowell 3 secured on the vessel and fixed on the fastening unit 3. The temperature-sensitive component 2 can, for example, be a resistance temperature detector or a thermocouple.

A sheath 4 is fitted on the second end section 3b of the thermowell 3 in such a way that the sheath 4 fully covers at least the second end section 3b of the thermowell 3. The sheath 4 can be fitted on the thermowell 3 via a welding process, an adhesive process or mechanically for example.

The sheath 4 is perforated by circular holes 4c of the same diameter. The tip of the sheath 4 has an end edge 3g featuring a perforation with semi-circular holes. This structure ensures that the vortex shedding w at the temperature sensor 1 is dramatically reduced, which is reflected in lower resulting forces and therefore a longer service and operating life of the temperature sensor 1.

The sheath 4 can, for example, be made from perforated metal which is bent into a pipe and welded. The end edge 3g can then be manufactured in such a way that the material is cut via a series of perforated holes 4c. Alternatively, the holes can have another cross-section shape which differs from a circular area. In one embodiment, the sheath 4 is made from a ceramic material or a composite material. In this case, the material can be pressed or cast into a mold and, in the case of a ceramic material, then sintered. In all cases, the sheath 4 should only have a low thickness of several millimeters.

With regard to reducing vortex shedding, the temperature sensor 1 offers optimum functionality if the sheath is perforated in such a way that provides a porosity in the range of 28% to 64%, wherein the porosity is a ratio of the total area of the holes 4c to the total area of the sheath 4.

Furthermore, the ratio between the internal diameter 4b of the sheath 4 and the outer diameter 3f of the second end section 3b of the thermowell 3 should be in the range from 1.1 to 1.5. In this case, it is possible to reduce vortex shedding by up to 96% for Reynolds numbers between 2x10⁴ and 2x10⁵.

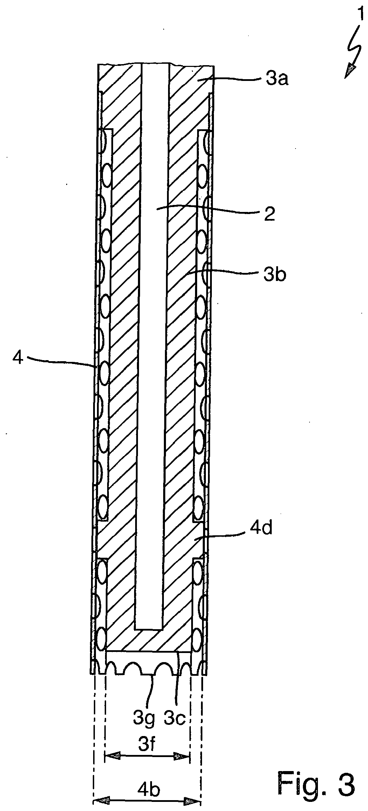

Fig. 3 shows an embodiment of the temperature sensor 1 according to the invention. In addition to the fastening method already mentioned, the sheath 4 can be secured to the thermowell using fastening elements 4d, enabling greater stability. These fastening elements 4d can, for example, be annular recesses of the thermowell 3 on which the sheath is supported.

It is not necessary for the sheath 4 to cover the entire thermowell 3 as the tip of the thermowell 3, in the form of the second end section 3b, embodies the place where the majority of vortex shedding w occurs.

The second end section 3b of the thermowell 3 can be designed in any way, for example it can be designed such that the outer diameter 3f of the second end section 3b is equal to the outer diameter 3h of the first end section 3a of the thermowell 3 or smaller than the outer diameter 3h of the first end section 3a of the thermowell 3.

Furthermore, provisions can be made that the second end section 3b of the thermowell 3 is cylindrical in design, or that the second end section 3b of the thermowell 3 tapers conically. Due to the fact that the sheath 4 covers the entire second end section 4 of the thermowell 3, the second end section 3b can have any shape. In this way, it is possible to use a rod-shaped thermowell 3 with a square cross-section or a cross-section of another shape.

The temperature sensor 1 according to the invention does not necessarily need to have a thermowell 3. It is also possible that a temperature-sensitive component 2, which has a rod-like design, is surrounded by the sheath 4 and thereby receives protection against vibrations which are induced through vortex shedding w.

Finally provisions can also be made that the thermowell 3 also has an annular element - not shown here - in addition to the fastening unit 3d via said element the first end section 3a of the thermowell 3 is in permanent contact with the inlet of the vessel. In this way, the free length of the thermowell 3 is reduced, thereby additionally attenuating the vibrations of any remaining, weakened vortex shedding.

The temperature sensor 1 according to the invention can be used in a wide range of applications. For example, the temperature sensor 1 can be used in a thermal flowmeter. It is self evident that a wide range of applications are feasible other than the applications mentioned.

Similarly, the temperature sensor 1 according to the invention is not limited to the embodiments and examples described.

### Legend for diagrams

- 1: Temperature sensor
- 2: Temperature-sensitive component
- 3: Thermowell
- 3a: First end section of thermowell
- 3b: Second end section of thermowell
- 3c: Sealed end
- 3d: Fastening unit
- 3e: Axial length of second end section
- 3f: Outer diameter of second end section
- 3g: End edge
- 3h: Outer diameter of first end section
- 3j: Interior area of thermowell
- 4: Sheath
- 4a: Axial length of sheath
- 4b: Internal diameter of sheath
- 4c: Circular holes
- 4d: Additional fastening elements
- v: Flow direction
- W: Vortex shedding

## Claims

1. Temperature sensor (1) for measuring the temperature of a medium in a vessel or a pipe, consisting at least of:
- a temperature-sensitive component (2);
- a thermowell (3), which has a first end section (3a), a second end section (3b) with a sealed end (3c) and an interior area (3j) into which the temperature-sensitive component (2) is introduced, wherein the first end section (3a) has a fastening unit (3d) via which the thermowell (3) is fitted on the vessel, and wherein the second end section (3b) has an axial length (3e) and an outer diameter (3f);
**characterized in that** the temperature sensor further comprises
- a tubular sheath (4) which has an axial length (4a), which is at least the same length of the second end section (3b) of the thermowell (3), and an internal diameter (4b), which is larger than the outer diameter (3f) of the second end section (3b) of the thermowell (3), wherein the sheath (4) is perforated by a series of circular holes (4c) of equal diameter in such a way that provides a porosity in the range of 28% to 64%, wherein the porosity is a ratio of the total area of the holes (4c) to the total area of the sheath (4) and wherein the sheath (4) is fitted on the thermowell (3) in such a way that the sheath (4) covers the second end section (3b) of the thermowell (3) at least.

2. Temperature sensor (1) as claimed in Claim 1, wherein the sheath (4) projects over the second end section (3b) of the thermowell (3) in an axial direction.

3. Temperature sensor as claimed in at least one of the Claims 1 or 2, wherein the sheath (4) has an end edge (3g) featuring a perforation with semi-circular holes.

4. Temperature sensor (1) as claimed in at least one of the previous claims, wherein the ratio between the internal diameter (4b) of the sheath (4) and the outer diameter (3f) of the second end section (3b) of the thermowell (3) is in the range from 1.1 to 1.5.

5. Temperature sensor (1) as claimed in one of the previous claims, wherein the first end section (3a) of the thermowell (3) has an outer diameter (3h) and wherein the outer diameter (3f) of the second end section (3b) is equal to the outer diameter (3h) of the first end section (3a) of the thermowell (3) or is smaller than the outer diameter (3h) of the first end section (3a) of the thermowell (3).

6. Temperature sensor (1) as claimed in Claim 5, wherein the second end section (3b) of the thermowell (3) is cylindrical in shape.

7. Temperature sensor (1) as claimed in Claim 5, wherein the second end section (3b) of the thermowell (3) tapers conically.

8. Temperature sensor (1) as claimed in at least one of the previous claims, wherein the sheath (4) is made from a metallic material, particularly stainless steel or a metal alloy, a ceramic material or a composite material.

9. Temperature sensor (1) as claimed in at least one of the previous claims, wherein the thermowell (3) is made from a metallic material, particularly stainless steel or a metal alloy, a ceramic material or a composite material.

10. Temperature sensor (1) as claimed in at least one of the previous claims, wherein the sheath (4) is fitted on the thermowell (3) via a welding process, an adhesive process or mechanically.

11. Temperature sensor (1) as claimed in Claim 10, wherein the sheath (4) is additionally fitted on the thermowell (3) using fastening elements (4d).

12. Temperature sensor (1) as claimed in at least one of the previous claims, wherein the sheath (4) is not permanently secured to the thermowell (3), but instead is mounted in a mobile or pivoted manner.

13. Temperature sensor (1) as claimed in at least one of the previous claims, wherein the fastening unit (3d) is a screwed plug, a weld-in piece or a flange.

14. Temperature sensor (1) as claimed in one of the previous claims, wherein the thermowell (3) also has an annular element in addition to the fastening unit (3d) via said element the first end section (3a) of the thermowell (3) is in permanent contact with the inlet of the vessel.

## Patentansprüche

1. Temperatursensor (1) für die Messung der Temperatur eines Mediums in einem Behälter oder einem Rohr, bestehend aus mindestens:
- einer temperaturempfindlichen Komponente (2);
- einem Schutzrohr (3), welches über einen ersten Endabschnitt (3a), einen zweiten Endabschnitt (3b) mit einem dicht verschlossenen Ende (3c) und einen Innenbereich (3j) verfügt, in den die temperaturempfindliche Komponente (2) eingeführt wird, wobei der erste Endabschnitt (3a) über eine Befestigungseinheit (3d) verfügt, über die das Schutzrohr (3) am Behälter angebracht wird, und wobei der zweite Endabschnitt (3b) über eine axiale Länge (3e) und einen Außendurchmesser (30) verfügt; **gekennzeichnet dadurch, dass** der Temperatursensor weiterhin Folgendes umfasst
- eine röhrenförmige Umhüllung (4), die eine axiale Länge (4a) aufweist, die mindestens der Länge des zweiten Endabschnitts (3b) des Schutzrohrs (3) entspricht, und einen Innendurchmesser (4b), der größer ist als der Außendurchmesser (3f) des zweiten Endabschnitts (3b) des Schutzrohrs (3), wobei die Umhüllung (4) mit einer Reihe kreisförmiger Löcher (4c) mit demselben Durchmesser perforiert ist, derart, dass eine Porosität im Bereich von 28 % bis 64 % gegeben ist, wobei die Porosität einem Verhältnis des Gesamtbereichs der Löcher (4c) zum Gesamtbereich der Umhüllung entspricht, und wobei die Umhüllung (4) so am Schutzrohr (3) angebracht ist, dass die Umhüllung (4) mindestens den zweiten Endabschnitt (3b) des Schutzrohrs (3) abdeckt.

2. Temperatursensor (1) nach Anspruch 1, wobei die Umhüllung (4) in einer axialen Richtung über den zweiten Endabschnitt (3b) des Schutzrohrs (3) hinausragt.

3. Temperatursensor nach mindestens einem der Ansprüche 1 oder 2, wobei die Umhüllung (4) über eine Endkante (3g) mit einer Perforation aus halbkreisförmigen Löchern verfügt.

4. Temperatursensor (1) nach mindestens einem der vorhergehenden Ansprüche, wobei das Verhältnis zwischen dem Innendurchmesser (4b) der Umhüllung (4) und dem Außendurchmesser (3f) des zweiten Endabschnitts (3b) des Schutzrohrs (3) im Bereich von 1,1 bis 1,5 liegt.

5. Temperatursensor (1) nach einem der vorhergehenden Ansprüche, wobei der erste Endabschnitt (3a) des Schutzrohrs (3) über einen Außendurchmesser (3h) verfügt und wobei der Außendurchmesser (3f) des zweiten Endabschnitts (3b) gleich dem Außendurchmesser (3h) des ersten Endabschnitts (3a) des Schutzrohrs (3) oder kleiner als der Außendurchmesser (3h) des ersten Endabschnitts (3a) des Schutzrohrs (3) ist.

6. Temperatursensor (1) nach Anspruch 5, wobei der zweite Endabschnitt (3b) des Schutzrohrs (3) eine zylindrische Form aufweist.

7. Temperatursensor (1) nach Anspruch 5, wobei der zweite Endabschnitt (3b) des Schutzrohrs (3) sich konisch verjüngt.

8. Temperatursensor (1) nach mindestens einem der vorhergehenden Ansprüche, wobei die Umhüllung (4) aus einem metallischen Material, insbesondere Edelstahl oder eine Metalllegierung, einem keramischen Material oder einem Verbundmaterial besteht.

9. Temperatursensor (1) nach mindestens einem der vorhergehenden Ansprüche, wobei das Schutzrohr (3) aus einem metallischen Material, insbesondere Edelstahl oder eine Metalllegierung, einem keramischen Material oder einem Verbundmaterial besteht.

10. Temperatursensor (1) nach mindestens einem der vorhergehenden Ansprüche, wobei die Umhüllung (4) am Schutzrohr (3) über einen Schweißprozess, einen Klebeprozess oder mechanisch befestigt wird.

11. Temperatursensor (1) nach Anspruch 10, wobei die Umhüllung (4) zusätzlich mit Befestigungselementen (4d) am Schutzrohr (3) befestigt wird.

12. Temperatursensor (1) nach mindestens einem der vorhergehenden Ansprüche, wobei die Umhüllung (4) nicht dauerhaft am Schutzrohr (3) befestigt wird, sondern stattdessen auf bewegliche oder schwenkbare Weise.

13. Temperatursensor (1) nach mindestens einem der vorhergehenden Ansprüche, wobei die Befestigungseinheit (3d) eine Verschlussschraube, ein Einschweißstück oder ein Flansch ist.

14. Temperatursensor (1) nach einem der vorhergehenden Ansprüche, wobei das Schutzrohr (3) zusätzlich zur Befestigungseinheit (3d) außerdem über ein ringförmiges Element verfügt und der erste Endabschnitt (3a) des Schutzrohrs (3) sich über dieses besagte Element in ständigem Kontakt mit dem Einlass des Behälters befindet.

## Revendications

1. Capteur de température (1) destiné à la mesure de la température d'un produit dans un réservoir ou un tube, comprenant au moins :
- un composant sensible à la température (2) ;
- un doigt de gant (3), qui présente une première section finale (3a), une deuxième section finale (3b) avec une extrémité étanche (3c) et une zone intérieure (3j) dans laquelle le composant sensible à la température (2) est introduit, la première section finale (3a) comprenant une unité de fixation (3d) par l'intermédiaire de laquelle le doigt de gant (3) est fixé sur le réservoir, et la deuxième section finale (3b) présentant une longueur axiale (3e) et un diamètre extérieur (3f) :
**caractérisé**
**en ce que** le capteur de température comprend en outre
- une gaine tubulaire (4) présentant une longueur axiale (4a), qui est au moins de la même longueur que la deuxième section finale (3b) du doigt de gant (3), et un diamètre intérieur (4b), qui est supérieur au diamètre extérieur (3f) de la deuxième section finale (3b) du doigt de gant (3), la gaine étant perforée par une série de trous circulaires (4c) de diamètre égal, de telle sorte à produire une porosité dans la plage de 28 % à 64 %, la porosité étant un rapport entre la surface totale des trous (4c) et la surface totale de la gaine (4), et la gaine (4) étant fixée sur le doigt de gant (3) de telle manière que la gaine (4) recouvre au minimum la deuxième section finale (3b) du doigt de gant (3).

2. Capteur de température (1) selon la revendication 1, pour lequel la gaine (4) se projette sur la deuxième section finale (3b) du doigt de gant (3) dans une direction axiale.

3. Capteur de température (1) selon au moins l'une des revendications 1 ou 2, pour lequel la gaine (4) présente un bord final (3g) comprenant une perforation avec des trous semi-circulaires.

4. Capteur de température (1) selon au moins l'une des revendications précédentes, pour lequel le rapport entre le diamètre intérieur (4b) de la gaine (4) et le diamètre extérieur (3f) de la deuxième section finale (3b) du doigt de gant (3) est situé dans la page de 1,1 à 1,5.

5. Capteur de température (1) selon l'une des revendications précédentes, pour lequel la première section finale (3a) du doigt de gant (3) présente un diamètre extérieur (3h) et pour lequel le diamètre extérieur (3f) de la deuxième section finale (3b) est égal au diamètre extérieur (3h) de la première section finale (3a) du doigt de gant (3) ou est inférieur au diamètre extérieur (3h) de la première section finale (3a) du doigt de gant (3).

6. Capteur de température (1) selon la revendication 5, pour lequel la deuxième section finale (3b) du doit de gant (3) est de forme cylindrique.

7. Capteur de température (1) selon la revendication 5, pour lequel la deuxième section finale (3b) du doigt de gant (3) se rétrécit coniquement.

8. Capteur de température (1) selon au moins l'une des revendications précédentes, pour lequel la gaine (4) est constituée d'un matériau métallique, notamment un acier inoxydable ou un alliage métallique, d'un matériau céramique ou d'un matériau composite.

9. Capteur de température (1) selon au moins l'une des revendications précédentes, pour lequel le doigt de gant (3) est constitué d'un matériau métallique, notamment un acier inoxydable ou un alliage métallique, d'un matériau céramique ou d'un matériau composite.

10. Capteur de température (1) selon au moins l'une des revendications précédentes, pour lequel la gaine (4) est fixée sur le doigt de gant (3) au moyen d'un processus de soudage, d'un processus de collage ou mécaniquement.

11. Capteur de température (1) selon la revendication 10, pour lequel la gaine (4) est fixée additionnellement sur le doigt de gant (3) à l'aide d'éléments de fixation (4d).

12. Capteur de température (1) selon au moins l'une des revendications précédentes, pour lequel la gaine (4) n'est pas fixée en permanence au doigt de gant (3), mais est, au lieu de cela, montée d'une manière mobile ou pivotante.

13. Capteur de température (1) selon au moins l'une des revendications précédentes, pour lequel l'unité de fixation (3d) est un bouchon fileté, une pièce à souder ou une bride.

14. Capteur de température (1) selon l'une des revendications précédentes, pour lequel le doigt de gant (3) comporte également un élément annulaire en plus de l'unité de fixation (3d), élément par l'intermédiaire duquel la première section finale (3a) du doigt de gant (3) est en contact permanent avec l'entrée du réservoir.
